## Europäisches Patentamt
## European Patent Office
## Office européen des brevets

(19)

(11) Veröffentlichungsnummer: **0 195 278**
**B1**

(12) # EUROPÄISCHE PATENTSCHRIFT

(45) Veröffentlichungstag der Patentschrift:
**06.12.89**

(51) Int. Cl.⁴: **G 01 L 3/10**, B 22 D 11/06

(21) Anmeldenummer: **86102314.1**

(22) Anmeldetag: **22.02.86**

(54) **Drehmomentsensor und Verfahren zur Herstellung eines Bandes.**

(30) Priorität: **16.03.85 DE 3509552**

(43) Veröffentlichungstag der Anmeldung:
**24.09.86 Patentblatt 86/39**

(45) Bekanntmachung des Hinweises auf die Patenterteilung:
**06.12.89 Patentblatt 89/49**

(84) Benannte Vertragsstaaten:
**AT DE FR GB IT SE**

(56) Entgegenhaltungen:
**DE-A-3 319 449**
**US-A-4 142 571**
**US-A-4 212 343**

**IEEE TRANSACTIONS ON MAGNETICS, Band MAG-20, Nr. 5, Teil 1, September 1984, Seiten 951-953, IEEE, New York, US; I. SASADA et al.: "Torque transducers with stress-sensitive amorphous ribbons of chevron-pattern"**

(73) Patentinhaber: **VACUUMSCHMELZE GMBH, Grüner Weg 37 Postfach 2253, D-6450 Hanau 1 (DE)**

(72) Erfinder: **Hilzinger, Hans-Rainer, Dr., Leipzigerstrasse 65, D-6456 Langenselbold (DE)**
Erfinder: **Nilius, Hans-Joachim, Leipzigerstrasse 29, D-6453 Seligenstadt (DE)**
Erfinder: **Friedrichs, Michael, Katharina-Belgica-Strasse 3a, D-6450 Hanau 1 (DE)**

EP 0 195 278 B1

**Beschreibung**

Die Erfindung betrifft einen Drehmomentsensor, bei dem mindestens ein aus magnetostriktivem amorphem Material bestehendes streifenförmiges Teil am Umfang einer drehbaren Welle mit dieser fest verbunden ist und von die Welle umgebenden elektrischen Primär- und Sekundärwicklungen umgeben ist (Anspruch 1) sowie ein Verfahren zur Herstellung eines Bandes (Anspruch 6).

Derartige Drehmomentsensoren sind beispielsweise aus der Zeitschrift IEEE TRANSACTIONS ON MAGNETICS, Vol. Mag 20, September 1984, Seiten 942 bis 947 und 951 bis 953 bekannt. Hier werden Streifen von amorphem Material mit Abstand zueinander und mit einem Winkel von 45° zu einer Wellenachse auf den Umfang der Welle geklebt. Die Welle ist von einer Erregungs- und zwei Sekundärspulen konzentrisch umgeben. Die in den Sekundärspulen erzeugten Spannungen können beispielsweise in einer Brückenschaltung verglichen und ausgewertet werden. Dadurch entsteht ein Signal, das weitgehend proportional dem Drehmoment ist, dem die betreffende Welle ausgesetzt wird. Dieses Signal ist vom Drehmoment abhängig, da dies eine Verformung der Welle und der damit verbundenen Streifen bewirkt und da sich die magnetischen Eigenschaften derartiger ferromagnetischer Materialien ändern, wenn sie einer mechanischen Spannung ausgesetzt werden.

Ferner ist es bekannt, die weichmagnetischen Streifen mit eingestanzten oder geätzten Schlitzen zu versehen. Hierdurch wird eine magnetische Orientierung erreicht. Derartige Drehmomentsensoren sind in der bereits genannten Zeitschrift IEEE TRANSACTIONS ON MAGNETICS, Vol. MAG 20, auf Seite 946 und der DE-AI-33 19 449 dargestellt und beschrieben.

Aufgabe der vorliegenden Erfindung ist es, eine Anordnung für ferromagnetische Folien für einen Drehmomentsensor anzugeben, bei der die Aufbringung der Folien wesentlich vereinfacht wird und bei der sich zusätzlich eine Verminderung der sogenannten Umlaufmodulation ergibt.

Unter Umlaufmodulation versteht man hierbei die Abhängigkeit bzw. Änderung des erhaltenen Signals für das Drehmoment von der Winkelstellung der Welle. Die Umlaufmodulation wird bei der erfindungsgemäßen Anordnung im wesentlichen dadurch vermindert, daß ein oder zwei weitgehend geschlossene Ringe aus amorpher ferromagnetischer Folie um die Welle herumgelegt und mit dieser fest verbunden sind. Eine weitere Verringerung der Abhängigkeit des Signals von Störeinflüssen durch benachbarte, von Magnetfeldern des Drehmomentsensors beeinflußte Teile läßt sich durch eine bestimmte Anordnung von Kurzschlußringen erzielen.

Diese Aufgabe wird erfindungsgemäß durch die Merkmale des Anspruchs 1 gelöst. Besondere Ausführungsarten sind in dem abhängigen Ansprüchen angegeben und im Anspruch 6 ist ein Verfahren zur Herstellung eines Bandes angegeben.

Zur Herstellung einer erfindungsgemäß zu verwendenden ferromagnetischen Folie läßt sich im wesentlichen ein Verfahren verwenden, wie es beispielsweise in der US-PS-4 386 648 bzw. der EP-PS-26 812 beschrieben ist. Bei diesem Verfahren wird ein Band aus einer Schmelze dadurch hergestellt, daß die Schmelze durch eine im wesentlichen rechteckige Düsenöffnung auf eine sich bewegende Kühloberfläche gegossen wird. Hierbei wird der Druck der Schmelze, der sich aus dem statischen Druck der geschmolzenen Legierung und gegebenenfalls einem auf die Oberfläche der Schmelze wirkenden Gasdruck zusammensetzt, so eingestellt, daß die Schmelze in Bewegungsrichtung der Kühloberfläche auf dieser etwa eine Ausdehnung besitzt, die dem Abstand der Innenränder der Düsenöffnung entspricht.

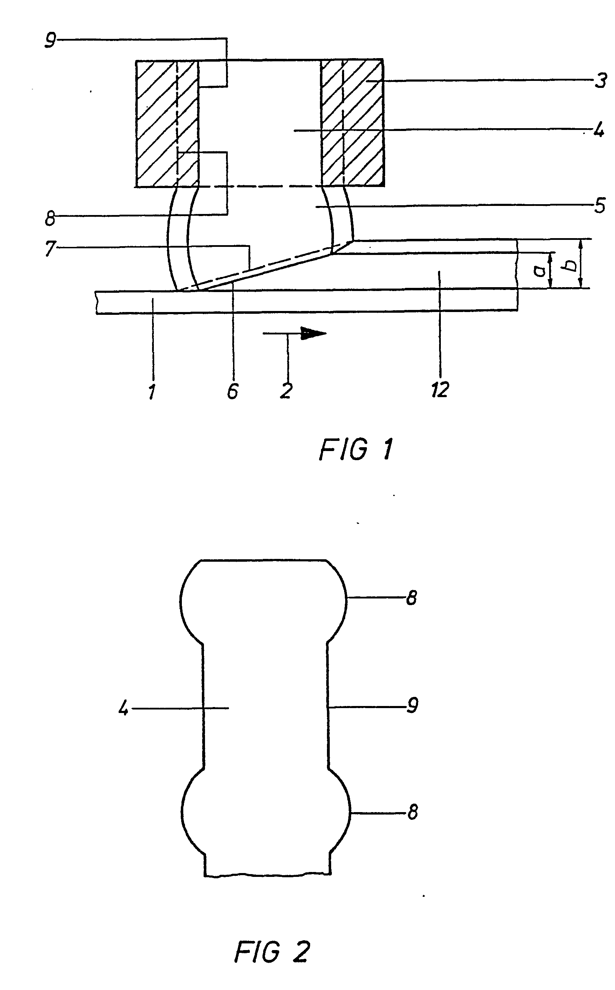

Dies ist im einzelnen in Fig. 1 zu sehen. Hier bewegt sich eine Kühloberfläche 1, z. B. eine Kupfertrommel, in Richtung des Pfeiles 2 unterhalb einer Düse 3. Durch die Öffnung 4 der Düse 3 strömt eine geschmolzene Metalllegierung und bildet auf der Kühloberfläche 1 einen flüssigen Tropfen 5. Dieser steht in Berührung mit der Kühloberfläche 1 und es bilden sich zwei Erstarrungsfronten 6, 7 aus. Zwei Erstarrungsfronten ergeben sich wegen der speziell gewählten Form der Öffnung 4, durch die ein Band mit in Längsrichtung sich ändernder Dicke erzeugt wird.

Wie im einzelnen aus Fig. 2 zu ersehen ist, ist die Öffnung 4 der Düse 3 im wesentlichen rechteckig, besitzt aber in kurzen Abständen voneinander Aufweitungen 8, die von schmaleren Bereichen 9 voneinander getrennt sind. Damit erhält man senkrecht zur Bewegungsrichtung der Kühloberfläche über das Band unterschiedliche Abmessungen des flüssigen Tropfens 5 in Richtung des Pfeiles 2 und es entsteht in dem schmalen Bereich die Erstarrungsfront 6 und in den Bereichen der Aufweitungen 8 die Erstarrungsfront 7. Dies hat zur Folge, daß die Dicke des Bandes über die Breite zwischen dem Wert a und dem Wert b schwankt.

In Fig. la ist in einem Meßdiagramm die Dicke D des Bandes in Mikrometer über der Breite B in Millimeter aufgetragen. Man sieht, daß die Bereiche größerer Dicke etwa einen Abstand von 1 mm aufweisen und so weitgehend homogen über den Umfang einer Welle verteilt sein können.

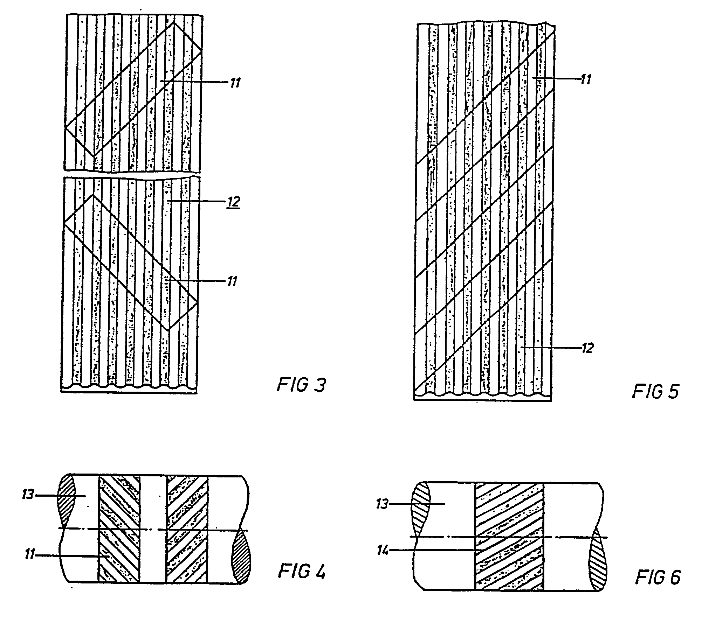

Ein Ausschnitt dieses Bandes ist in Fig. 3 dargestellt. Hier sind die dickeren Bereiche schraffiert dargestellt. Streifenförmige Teile 11 können nun aus diesem Material dadurch hergestellt werden, daß ein Rechteck oder ein Parallelogramm aus dem Band 12 herausgestanzt wird. Die längeren Schnittkanten verlaufen dabei in einem Winkel zwischen 0 und 90° zur Längsachse des Bandes 12. Diese Bänder können nun - wie in Fig. 4 gezeigt - um den Umfang einer Welle 13 gewickelt und mit dieser fest verbunden werden. Durch die Dickenschwankungen des Bandes, die dann vorzugsweise in einem Winkel zwischen 40 und 50° (etwa 45°) zur Richtung der Welle 13 verlaufen, ergibt sich eine magnetische Vorzugsrichtung, in der das als ferromagnetische Folie wirkende Band 12 leichter zu magnetisieren ist.

Diese Anordnung ermöglicht es, über den Umfang der Welle 13 verteilt sehr viele leichter zu magnetisierende Streifen vorzusehen. Hierdurch wird die Umlaufmodulation des Signals erheblich vermindert. Hierzu ist es nur nötig, das streifenförmige Teil 11 auf dem Umfang der Welle 13 senkrecht zur Wellenachse zu befestigen, vorzugsweise wird die Länge des streifenförmigen Teils so gewählt, daß sie entweder dem Umfang der Welle oder einem Teil desselben entspricht.

Fig. 5 zeigt das Band 12 mit parallelogrammförmigen, streifenförmigen Teilen 11, die sich einfach durch Schnitte des Bandes 12 ergeben. Diese haben gegenüber rechteckförmigen, streifenförmigen Teilen den Vorteil, daß die Stoßkanten 14 (Fig. 6) parallel zur Richtung der sich durch Dickenänderung ergebenden Streifenlänge liegen und dadurch wie eine Querschnittsverminderung wirken. Bei größerem Wellendurchmesser können mehrere dieser streifenförmigen Teile verwendet werden, um eine ferromagnetische Folie vollständig um die Welle 13 zu legen.

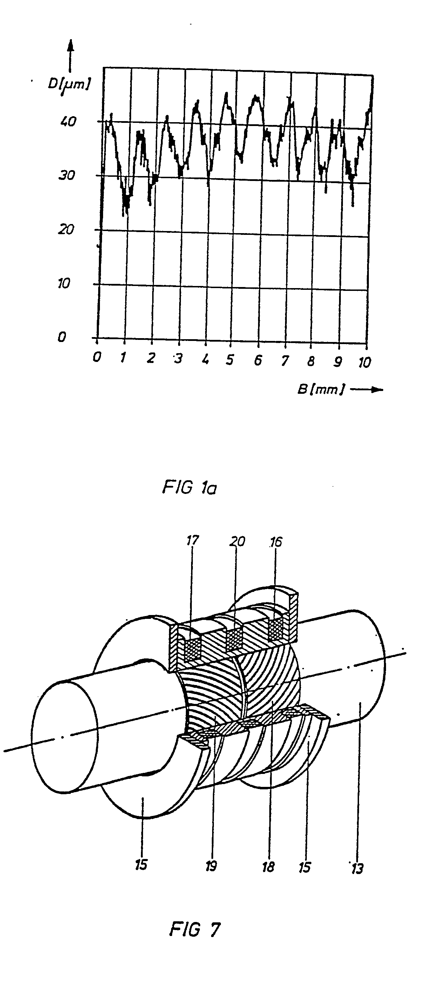

Eine Verringerung von Störeinflüssen, die durch in der Nähe des Drehmomentsensors angeordnete Teile hervorgerufen werden können, läß sich durch die Anordnung von Kurzschlußringen 15 erzielen, wie Fig. 7 zeigt. Hier sind die Kurzschlußringe 15 um die Welle 13 herum angeordnet und zwar zu beiden Seiten von Sekundärwicklungen 16 bzw. 17, welche die ferromagnetischen Folien 18 und 19 mit sich ändernden Dickenbereichen umgeben. Zwischen den Sekundärwicklungen 16 und 17 befindet sich die für die Wechselstromerregung sorgende Primärwicklung 20. Für den Einsatz in besonders störanfälligen Umgebungen wäre es außerdem denkbar, ein Abschirmgehäuse um die Wicklungsanordnung zu legen.

## Patentansprüche

1. Drehmomentsensor, bei dem mindestens ein aus magnetostriktivem, amorphem Material bestehendes streifenförmiges Teil (11) am Umfang einer drehbaren Welle (13) mit dieser fest verbunden ist und von die Welle (13) umgebenden elektrischen Primär- und Sekundärwicklungen (20; 16, 17) umgeben ist, *dadurch gekennzeichnet*, daß das Teil (11) aus einem amorphen Band (12) mit senkrecht zur Bandlängsrichtung periodisch sich ändernder Dicke herausgeschnitten ist.

2. Drehmomentsensor nach Patentanspruch 1 *dadurch gekennzeichnet*, daß die streifenförmigen Teile (11) in einem Winkel von 40 bis 50° (etwa 45°) verlaufende streifenförmige Verdickungen aufweisen.

3. Drehmomentsensor nach Anspruch 2, *dadurch gekennzeichnet*, daß die streifenförmigen Teile (11) Parallelogrammform besitzen.

4. Drehmomentsensor nach Patentanspruch 1 mit einem oder zwei auf einer Welle (13) nebeneinander angeordneten ferromagnetischen Folien, *dadurch gekennzeichnet*, daß jedes streifenförmige Teil (11), das die ferromagnetische Folie bildet, eine dem Umfang der Welle (13) entsprechende Länge besitzt, so daß der gesamte Umfang der Welle von dem Teil umgeben ist.

5. Drehmomentsensor nach Anspruch 4, *dadurch gekennzeichnet*, daß für einen Ring aus einer ferromagnetischen Folie mehrere Teile (11) vorgesehen sind, die zusammen den gesamten Umfang der Welle (13) umgeben.

6. Verfahren zur Herstellung eines Bandes (12) mit periodisch sich ändernder Dicke direkt aus der Schmelze mit einer in der Nähe einer sich bewegenden Kühloberfläche (1) angeordneten Düse (3), bei dem der Druck der Schmelze in der Öffnung (4) der Düse (3) so groß gewählt ist, daß der flüssige Tropfen (5) zwischen Düse (3) und Kühloberfläche (1) in Bewegungsrichtung der Kühloberfläche (Pfeil 2) eine durch die Innenabmessungen der Öffnung (4) bestimmte Ausdehnung besitzt, *dadurch gekennzeichnet*, daß eine Düse (3) mit einer schlitzförmigen Öffnung (4) vorgesehen ist und daß die Öffnung (4) senkrecht zur Bewegungsrichtung der Kühloberfläche (1) in der Austrittsebene der Schmelze abwechselnd schmalere Bereiche (9) und Aufweitungen (8) besitzt.

## Claims

1. A torque sensor, wherein at least one strip-like component (11) composed of amorphous, magnetostrictive material is permanently connected to a rotatable shaft (13) at its periphery and is encircled by electrical primary and secondary windings (20; 16, 17) which surround the shaft (13), *characterised in that* the component (11) is cut out from an amorphous strip (12) whose thickness changes periodically at right angles to the longitudinal direction of the strip.

2. A torque sensor as claimed in Claim 1, *characterised in that* the strip-like components (11) are provided with strip-like thickened portions which extend at an angle of 40 to 50° (approximately 45°).

3. A torque sensor as claimed in Claim 2, *characterised in that* the strip-like components (11) are in the form of a parallelogram.

4. A torque sensor as claimed in Claim 1 comprising one or two ferromagnetic foils arranged side-by-side on a shaft (13), *characterised in that* each strip-like component (11) which forms the ferromagnetic foil has a length corresponding to the periphery of the shaft (13) so that the entire periphery of the shaft is surrounded by the component.

5. A torque sensor as claimed in Claim 4 *characterised in that* a plurality of components (11) are provided, which together surround the entire periphery of the shaft (13) to form a ring of ferromagnetic foil.

6. A process for the production directly from a melt of a strip (12) whose thickness changes periodically, comprising a nozzle (3) arranged in the vicinity of a moving cooling surface (1), wherein the pressure of the melts in the opening (4) of the nozzle (3) is selected to be such that the liquid droplet (5) between the nozzle (3) and the cooling surface (1) in the direction of movement of the cooling surface (arrow 2) has a length which is determined by the internal dimensions of the opening (4), *characterised in that* a nozzle (3) with a slot-like opening (4) is provided, and that the opening (4) possesses alternating narrower zones (9) and wider zones (8) in the output plane of the melt, at right angles to the direction of movement of the cooling surface (1).

**Revendications**

1. Capteur de couple de rotation, pour lequel au moins une partie (11) en forme de bande se composant d'une matière magnétostrictive amorphe est rigidement reliée à un arbre tournant (13), à la périphérie de celui-ci, et entourée de bobinages primaires et secondaires (20 ; 16 ; 17) entourant électriquement l'arbre (13), caractérisé en ce que la partie (11) se composant d'une bande amorphe (12) est découpée avec une épaisseur variant périodiquement, transversalement à la direction longitudinale de la bande.

2. Capteur de couple de rotation selon la revendication 1, caractérisé en ce que les parties (11) en forme de bande présentent des épaississements en forme de bandes s'étendant sous un angle faisant de 40 à 50° (à peu près 45°).

3. Captcur de couple de rotation selon la revendication 2, caractérisé en ce que les parties en forme de bandes (11) présente une forme de parallélogramme.

4. Capteur de couple de rotation selon la revendication 1, avec une ou plusieurs feuilles ferromagnétiques disposées les unes à côté des autres sur un arbre (13), caractérisé en ce que chaque partie (11) en forme de bande formant la feuille ferromagnétique présente une longueur correspondant à la circonférence de l'arbre (13), de façon que la totalité de la circonférence de l'arbre soit entourée par la partie.

5. Capteur de couple de rotation selon la revendication 4, caractérisé en ce que plusieurs parties (11) sont prévues pour former une bague se composant d'une feuille ferromagnétique et entourent conjointement la totalité de la circonférence de l'arbre (13).

6. Procédé de fabrication d'une bande (12) d'épaisseur variant périodiquement, directement à partir de la coulée avec une buse (3) disposée à proximité d'une surface froide (1) se déplaçant, pour lequel la pression de la coulée dans l'orifice (4) de la buse (3) est choisie telle que la goutte liquide (5) présente entre buse (3) et surface froide (4) une certaine extension dans le sens de déplacement de la surface froide (flèche 2) qui est déterminée par les dimensions intérieures de l'orifice (4), caractérisé en ce qu'il est prévu une buse (3) avec un orifice (4) en forme de fente et en ce que l'orifice (4) présente perpendiculairement à la direction du déplacement de la surface froide (1) des zones étroites (9) et des élargissements (8) alternants dans le plan de sortie du produit en fusion.

FIG 1

FIG 2

1

FIG 3

FIG 5

FIG 4

FIG 6

FIG 1a

FIG 7